# EUROPÄISCHE PATENTSCHRIFT

(11) **EP 1 604 734 B1**
(45) Veröffentlichungstag und Bekanntmachung des Hinweises auf die Patenterteilung: **21.05.2008**
(21) Anmeldenummer: 05012437.9
(22) Anmeldetag: 09.06.2005
(51) Int. Cl.: B01F 13/02, B01L 3/00

(54) **Verfahren und Vorrichtung zum Nachweis von Analyten**
Method and apparatus for the detection of analytes
Procédé et appareil de détection des analytes

(30) Priorität: 11.06.2004 DE 102004028303
(43) Veröffentlichungstag der Anmeldung: 14.12.2005
(73) Patentinhaber: F. Hoffmann-La Roche AG, 4070 Basel (CH); Roche Diagnostics GmbH, 68305 Mannheim (DE)
(72) Erfinder: Mann, Karl-Heinz, 82362 Weilheim (DE); Mayer, Thomas, 82467 Garmisch-Partenkirchen (DE); Vieth, Friedhelm, 82407 Wielenbach (DE)
(74) Vertreter: Tiesmeyer, Johannes

(56) Entgegenhaltungen:
- EP-A- 0 643 989
- US-A- 3 854 703
- US-A- 5 650 327
- US-A1- 2003 022 176

## Beschreibung

Die Erfindung betrifft ein Verfahren zum Nachweis von Analyten in einer Flüssigkeit nach dem Oberbegriff des Anspruchs 1, und eine Vorrichtung nach dem Oberbegriff des Anspruchs 7.

Die Erfindung befasst sich insbesondere mit Möglichkeiten einer verbesserten Mischbehandlung der Flüssigkeit und in diesem Zusammenhang mit Möglichkeiten des verbesserten Heranführens von Analyten in der Flüssigkeit an Reaktanden, die an einer von der Flüssigkeit belegten Fläche des Trägers, insbesondere Biochips, immobilisiert sind.

In Biochip-Anwendungen, insbesondere Immunoassay-Anwendungen, bei denen Bindungsreaktionen zwischen Reaktanden, die an einer Trägerfläche immobilisiert sind, und Analyten, die in einer die Trägerfläche benetzenden Flüssigkeit vorhanden sind, nachzuweisen sind, tritt folgendes Problem auf. Aufgrund der Bindung von Analyten an immobilisierte Reaktanden sinkt in einer Grenzschicht an der Trägerfläche die Konzentration an Analyten in der Flüssigkeit, so dass die Probenflüssigkeit in einer Grenzschicht an Analyten verarmt. Bedingt durch die normalerweise geringe Analytdiffusionsgeschwindigkeit, die üblicherweise nur weniger µm/s oder weniger beträgt, werden neue Analytmoleküle nicht rasch genug aus dem Probenflüssigkeitsvolumen nachgeliefert, so dass bei immunologischen Tests oder dgl. lange Inkubationszeiten zur Erzielung eines hinreichenden Messeffektes erforderlich sind. Es finden sich im Stand der Technik verschiedene Ansätze zur Lösung dieses Problems.

Aus der US 2003/0022176 A1 ist ein gattungsgemäßes Verfahren zum Nachweis von Analyten in einer Flüssigkeit bekannt, wobei die Flüssigkeit einer Mischbehandlung auf einer immobilisierten Reaktanden aufweisenden Bodenfläche eines als wannenartiges Gefäß ausgebildeten Trägers unterzogen wird und die Flüssigkeit bei der Mischbehandlung mittels einer zu der Trägerfläche gerichteten Düse mit einem Gasstrahl beaufschlagt wird. Die Düse ist schräg zu der Bodenfläche des Trägers ausgerichtet, so dass der Mischgasstrahl unter einem entsprechenden Winkel zur Vertikalen auf die Flüssigkeit trifft, um ein gewünschtes Wirbelmuster in der Flüssigkeit zu erzeugen. Dabei kann es auch vorgesehen sein, dass der schräg einfallende Gasstrahl relativ zu dem Träger bewegt wird, um die Wirbelbildung zu verstärken.

Derartige Verfahren zum Nachweis von Analyten in einer Flüssigkeit mit einem solchen Mischbehandlungsschritt sind ferner aus der US 5,650,327 A, der US 3,854,703 A und der EP 0 643 989 A1 bekannt, wobei das Mischen ebenfalls durch Beaufschlagung des Mischgutes mit einem schräg einfallenden Gasstrahl erfolgt, um eine makroskopische Wirbelbildung im Sinne eines Rühreffektes zu erzielen.

In der US 3,854,703 ist ferner eine Ausführungsvariante erläutert, bei der auf einem Trägerband mitgeführte Flüssigkeitströpfchen nacheinander einer sie mittig beaufschlagenden Einzeldüse und einem Düsenpaar aus nebeneinander angeordneten Düsen ausgesetzt werden, die vertikal nach unten gerichtet sind. Die Einzeldüsen flachen die Flüssigkeitstropfen ab und drücken sie aus der Mitte des Trägerbandes heraus. Bei der nachfolgenden Beaufschlagung durch das Düsenpaar wird der Tropfen wieder in Richtung zur Mitte des Trägerbandes hin gedrückt. Da mehrere einander abwechselnde Einzeldüsen und Düsenpaare auf jeden Tropfen der Reihe nach einwirken, erfolgt das Abflachen und Wiederaufbäumen des Tropfens mehrfach, um eine entsprechende Durchmischung des flüssigen Materials zu erzielen.

Aus der US 6 485 918 ist ein Mischverfahren für ein Mikroarray-Biochip mit einem verformbaren Deckel beschrieben, der über der Oberfläche des Mikroarrays angebracht ist. Das Verformen des Deckels erzeugt eine Strömungsbewegung in der Flüssigkeit zwischen Deckel und Mikroarrayoberfläche. Wenngleich dieses bekannte Verfahren für flächige Biochips mit am Boden immobilisierten Reaktanden geeignet ist, hat es jedoch den Nachteil, dass der Deckel während des Mischungsvorgangs stets mit der Probenflüssigkeit in Kontakt stehen muss. Zusätzliche Prozessschritte, wie Waschschritte, Reagenzzugabe usw., erfordern möglicherweise ein Öffnen des Deckels mit entsprechender Gefahr des Verlustes von Probenflüssigkeit und der Kontamination.

Aus der WO 00/10011 sind ein Verfahren und eine Vorrichtung zur grenzflächennahen Mischung von Proben in Biosensorsystemen, nämlich Biochips, bekannt. Zur Sensitivitätssteigerung wird bei diesem bekannten Verfahren die Flüssigkeit im Biochip mit mechanischen Wellen (Schall-, Ultraschall- oder Oberflächenwellen) angeregt, wobei eine bessere Durchmischung der Probenflüssigkeit möglichst an der Grenzschicht Chip/Flüssigkeit stattfinden soll, um die Diffusion der Analyten zu verbessern.

Aus der EP 0 281 958 A2 ist eine Vorrichtung zum Thermostatisieren und Mischen des Inhalts von Gefäßen einer Mikrotitrationsplatte für immunologische Tests bekannt. Diese bekannte Vorrichtung umfasst eine Haube, die einen Hohlraum definiert, in den eine Gasleitung mündet. Eine der Titrationsplatte zugewandte Begrenzungswand der Haube ist mit Gasaustrittsöffnungen versehen, die exzentrisch in Bezug auf die Gefäßachsen der Einzelgefäße der Mikrotitrationsplatte angeordnet und unter einem Winkel auf die Oberflächen der Flüssigkeiten in den Einzelgefäßen gerichtet sind. Das Einblasen warmer Luft mittels der Gasaustrittsöffnungen dient der Temperierung und der Erzeugung einer Rotationsmischbewegung der Flüssigkeit in den Einzelgefäßen.

Mit der verbesserten Durchmischung der Probenflüssigkeit in Probenröhrchen als Flüssigkeitsbehälter befassen sich z.B. die US 6 063 564, die US 4 479 720 und die US 5 009 998.

Die aus dem Stand der Technik bekannten mechanischen Mischverfahren, wie Schütteln, Ultraschallanwendung, Vortex usw. haben sich bei Biochips mit flächigem Träger bzw. ebener Trägerfläche mit einem Array aus Reaktanden nur sehr bedingt als wirksam und vorteilhaft erwiesen.

Der Erfindung liegt die Aufgabe zugrunde, ein Verfahren der eingangs genannten Art vorzuschlagen, welches bei der Durchführung von Tests auf der Basis von Bindungsreaktionen zwischen Analyten in einer Probenflüssigkeit und Reaktanden an einem von der Probenflüssigkeit benetzten Träger und somit bei typischen Biochip-Anwendungen eine Steigerung der Messempfindlichkeit bzw. Reduzierung der erforderlichen Inkubationszeit zur Erzielung eines hinreichenden Messeffektes ermöglicht. Weiterhin soll möglichst eine Homogenität der Bindungsreaktionen zwischen Analyten und Reaktanden ortsunabhängig über den gesamten Chip erfolgen. Hierunter ist zu verstehen, dass Reaktanden, die sich in der Mitte oder am Rande des Trägers bzw. Mikroarray-Chips befinden, im Wesentlichen gleich schnell und effektiv den Analyten binden können.

Zur Lösung dieser Aufgabe wird ein Verfahren mit den Merkmalen des Anspruchs 1 vorgeschlagen.

Dieses bei der Verwendung von wannenartigen Biochips mit im Wesentlichen ebenem Boden als Trägerfläche hervorragend geeignete Verfahren bewirkt eine effiziente lokale Durchmischung der die Analyten enthaltenden Probenflüssigkeit im Bereich der momentan vom Gasstrahl beaufschlagten Zone. Die Düse wird dabei von oben her so auf die Probenflüssigkeit gerichtet, dass der Gasstrahl in seinem Auftreffbereich Probenflüssigkeit lokal verdrängt. Dies hat den Effekt, dass der Probenflüssigkeitspegel im Auftreffbereich des Gasstrahls auf einen sehr geringen Wert von z.B. nur wenigen µm reduziert wird und dass in einer diesen Bereich verringerten Flüssigkeitspegels enthaltenden Zone die Probenflüssigkeit durch Verwirbelung effizient homogenisiert wird. Da der Auftreffpunkt des Gasstrahls die Trägerfläche abtastend überstreicht, wandert die Zone der intensiven Durchmischung der Probenflüssigkeit am Chipboden über die Trägerfläche, so dass in der zunächst an Analyten durch vorausgegangene Bindungsreaktionen verarmten Grenzschicht neue Analyten beschleunigt zugeführt werden. Damit wird die Wahrscheinlichkeit weiterer Bindungsreaktionen zwischen den Analyten und den immobilisierten Reaktanden vergrößert, so dass eine Empfindlichkeitssteigerung bzw. eine Reduzierung der Inkubationszeit und eine Verbesserung der Homogenität, insbesondere der ortsunabhängigen Homogenität der Analytbindung im Vergleich mit herkömmlichen Verfahren erreicht werden kann.

Bei dem Gasstrahl handelt es sich vorzugsweise um einen Luftstrahl, insbesondere um einen Strahl befeuchteter Luft. Die Befeuchtung der Luft dient zur Vermeidung des Austrocknens des Biochips.

Bei dem Gasstrahl kann es sich alternativ auch um einen Inertgasstrahl handeln.

Zwischen der Düse und dem Träger wird eine Relativbewegung erzeugt, um die Fläche mit dem Gasstrahl abtastend zu überstreichen. Das Überstreichen kann mehrfach, insbesondere periodisch erfolgen. Dies kann z.B. dadurch realisiert werden, dass die Düse bei festgehaltenem Träger in vorbestimmter Weise bewegt wird oder dass der Träger bei festgehaltener Düse verschoben wird. Nicht ausgeschlossen ist auch die Möglichkeit, dass sowohl die Düse als auch der Träger bewegt werden, um die Probenflüssigkeit abtastend zu beaufschlagen.

Als Gefäß für die Probenflüssigkeit wird ein wannenartiges Gefäß mit im Wesentlichen ebenem Boden als Trägerfläche für die immobilisierten Reaktanden verwendet. Insbesondere kommt als Träger ein Biochip mit einem Array von einzelnen Flächenbereichen, auf denen sich die Reaktanden befinden, in Frage.

Alternativ kann es vorgesehen sein, dass als Probengefäß ein wannenartiges Gefäß verwendet wird, in dem gesonderte Trägerelemente, etwa Festphasen-Mikropartikel, für die immobilisierten Reaktanden enthalten sind.

Als Luftstrahl wird vorzugsweise ein kontinuierlicher, im Wesentlichen gleichmäßiger Luftstrom zur Beaufschlagung der Flüssigkeit verwendet. Dabei soll es jedoch nicht ausgeschlossen sein, dass in alternativen Ausführungsformen ein modulierter, insbesondere pulsierender Luftstrom zur Anwendung kommt.

Ein besonderer Vorteil der Erfindung liegt darin, dass die vorgeschlagene Mischbehandlung der Flüssigkeit eine gute Homogenität der Bindungsreaktionen zwischen Analyten und immobilisierten Reaktanden ortsunabhängig über die gesamte Trägerfläche ermöglicht.

Gegenstand der Erfindung ist ferner eine Vorrichtung mit den Merkmalen des Anspruchs 7 zur Durchführung des erfindungsgemäßen Verfahrens.

Die Vorrichtung umfasst eine Halterung zur Aufnahme wenigstens eines als wannenartiges Gefäß für die Flüssigkeit ausgebildeten Trägers, insbesondere Biochips, der eine Bodenfläche mit daran immobilisierten Reaktanden oder eine Bodenfläche zur Abstützung gesonderter Trägerelemente mit daran befindlichen Reaktanden aufweist, und eine Gaszufuhreinrichtung mit wenigstens einer Düse zum Ausstoßen eines Gasstrahls in Richtung der Bodenfläche eines an der Halterung befindlichen Trägers. Die Vorrichtung ist gekennzeichnet durch eine Antriebseinrichtung, die dazu eingerichtet ist, eine Relativbewegung zwischen der Düse und der Halterung in der Weise zu erzeugen, dass ein von der Düse ausgestoßener Gasstrahl die Bodenfläche abtastend überstreicht, wobei der Gasstrahl so orientiert ist, dass er vertikal auf die Flüssigkeit auftrifft.

Gemäß einer Weiterbildung der Erfindung ist die Halterung bewegbar gelagert, wobei die Antriebseinrichtung zur Bewegung der Halterung relativ zu der Düse eingerichtet ist.

In einer alternativen Ausführungsform der Erfindung ist die Düse bewegbar montiert, wobei die Antriebseinrichtung zur Bewegung der Düse relativ zu der Halterung eingerichtet ist.

Die Gaszufuhreinrichtung ist gemäß einer Weiterbildung der Erfindung zur Erzeugung eines mittels der Düse auszustoßenden Luftstrahls ausgebildet.

Die Gaszufuhreinrichtung umfasst vorteilhafterweise eine Luftbefeuchtungseinrichtung.

Insbesondere für die Durchführung von Massentests wird vorgeschlagen, dass die Halterung zur Aufnahme einer Vielzahl von Trägern bzw. Probengefäßen ausgebildet ist und jedem Träger bzw. Probengefäß wenigstens eine Düse zugeordnet ist.

Durch Variation von Düsenanordnung, Düsengeometrie, relativer Düsenbewegung und Luftstromintensität ist das erfindungsgemäße System gut anpassbar an relativ frei gestaltbare Biochips mit flächigem Analytreservoir und ebenem Boden. Eine Parallelbearbeitung einer Vielzahl von Biochips ist leicht möglich, da ein Druckreservoir gleichzeitig viele Düsen definiert mit Luft versorgen kann.

Die Erfindung wird nachstehend unter Bezugnahme auf die Zeichnungen näher erläutert. Darin zeigt:
- Fig. 1: in einer stark vereinfachten schematischen Darstellung eine Prinzipskizze zur Erläuterung des Verfahrens mit einem wannen-förmigen Biochip und einer darüber bewegten Gasdüse, und
- Fig. 2: eine stark vereinfachte schematische Darstellung einer Vorrichtung nach der Erfindung.

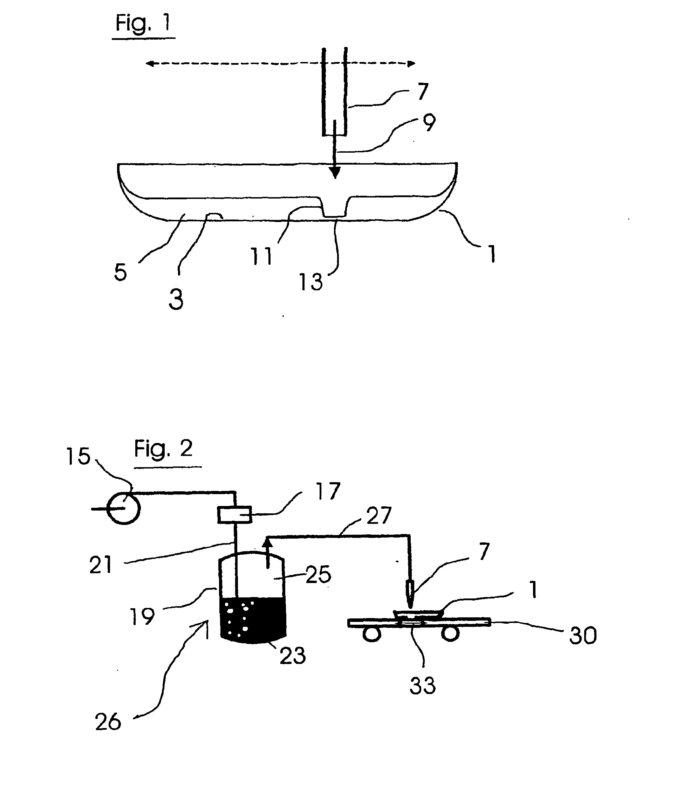

Fig. 1 zeigt einen wannenförmigen Biochip 1 mit einem im Wesentlichen ebenen Wannenboden 3, an dem vorzugsweise in einer Mikroarray-Anordnung Reaktanden bzw. Fängermoleküle immobilisiert sind. Die Bodenfläche 3 ist von einer Probenflüssigkeit 5 benetzt, welche Analyten enthält, die mit Reaktanden am Boden 3 des Biochips 1 Bindungen eingehen können, die z.B. durch Fluoreszenzmessung nachweisbar sind.

Da sich nach Zuführung des Probenfluids 5 zu dem Biochip 1 in einer Grenzschicht nahe am Boden 3 alsbald eine Zone der Verarmung an freien Analyten in der Flüssigkeit aufgrund von Bindungsvorgängen ausbildet, kommt es normalerweise zu einer Verzögerung weiterer Bindungen. Zur Vermeidung dieses nachteiligen Verzögerungseffektes wird gemäß Fig. 1 eine Gasdüse 7 über die Oberfläche der Probenflüssigkeit 5 bewegt, so dass der Auftreffpunkt des Gasstrahls 9 auf der Flüssigkeitsoberfläche die Trägerfläche 3 unter Aufrechterhaltung einer Zwischenlage an Flüssigkeit 5 überstreicht. Im Bereich des jeweiligen Auftreffpunktes des Gasstrahls 9 kommt es zu einer Verdrängung der Flüssigkeit 5, wie dies in Fig. 1 bei 11 angedeutet ist. Im Bereich dieser Zone 11 liegt nur noch ein sehr dünner Probenflüssigkeitsfilm 13 vor. Aufgrund der Beaufschlagung der Flüssigkeit mit dem Gasstrahl 9 ist jedoch die Flüssigkeit im Bereich des Films 13 gut durchmischt, so dass die "Analytverarmungszone" dort lokal durchbrochen ist und neue Analyten für Bindungen mit den Reaktanden zur Verfügung stehen. Da die Zone 11 über den gesamten interessierenden Bereich des Bodens 3 geführt werden kann, ist es möglich, das erhöhte Angebot an Analyten gleichmäßig über diesen Flächenbereich 3 zu verteilen. Mit dem erfindungsgemä-ßen Verfahren kann somit die Effizienz an Bindungen pro Zeiteinheit gesteigert werden, was mit einer Verringerung der erforderlichen Inkubationszeit zur Erzielung eines hinreichenden Messeffektes etwa bei Immunoassay-Anwendungen einhergeht.

Fig. 2 zeigt einen stark vereinfacht dargestellten schematischen Aufbau einer Vorrichtung nach der Erfindung mit einer z.B. als Membranpumpe ausgebildeten Luftpumpe 15 zur Erzeugung eines Luftstromes. Ein an der Druckseite der Pumpe 15 angeschlossener Luftmengensensor 17 dient zur Überwachung des Luftstromes und somit als Istwert-Geber für die Regelung des Luftstromes. Bei Testmessungen hat sich ein Luftstrom von etwa 7 ml/s als vorteilhaft erwiesen.

Zur Reduktion der Verdunstung von Probenflüssigkeit in dem Biochip 1 wird die der Düse 7 zugeführte Luft mittels einer Luftbefeuchtungseinrichtung 26 befeuchtet. Hierzu dient im Beispielsfall der Figur 2 ein teilweise mit Wasser gefüllter Druckkessel 19. Die von der Pumpe 15 geförderte Luft wird durch die Leitung 21 hindurch in den Wasservorrat 23 eingeblasen. Die daraufhin in das Behältervolumen 25 oberhalb des Wasservorrats 23 aufsteigende und unter Druck stehende Luft mit erhöhtem Feuchtegehalt gelangt dann über die Leitung 27 zur Düse 7. Die befeuchtete Luft wird dann von der Düse 7 im Strahl auf den Biochip 1 geblasen, um den unter Bezugnahme auf Fig. 1 erläuterten Effekt zu erzielen.

Der Biochip 1 befindet sich in Fig. 2 auf einer Halterung 30, bei der es sich z.B. um einen motorisch bewegten Schlitten handeln kann. Die Halterung 30 ist dabei in der Weise bewegbar, dass die feststehende Düse 7 mit dem zum Boden des Biochips gerichteten Luftstrahl die mit immobilisierten Reaktanden besetzte Trägerfläche des Biochips 1 abtasten kann. Dabei kann es vorgesehen sein, dass die Halterung 30 die durch den Doppelpfeil 33 angedeutete horizontale Hin- und Herbewegung sowie auch eine Hin- und Herbewegung quer dazu durchführen kann.

Es sei auch darauf hingeweisen, dass je nach Bedarf Düsen 7 mit unterschiedlich geformten Gasaustrittsspalten zur Anwendung kommen können. So soll es nicht ausgeschlossen sein, dass eine Düse einen langgestreckten Austrittsspalt aufweist, der z.B. näherungsweise die komplette Breite eines Biochips 1 überlappt. Dann kann der Bewegungsablauf bei der Bewegung des Biochips relativ zur Düse 7 auf eine einfache Vorwärts- und Rückwärtsbewegung reduziert werden. Im Beispielsfall der Figuren 1 und 2 trifft der Gasstrahl 9 näherungsweise vertikal auf die Flüssigkeit auf.

Es können auch Düsen mit mehreren Austrittsspalten oder Kapillaren verwendet werden. So wurde in Tests der Vorrichtung eine Düse aus zwei parallelen Stahlkapillaren verwendet, deren Abstand zueinander 1,4 mm beträgt und die jeweils einen Innendurchmesser von 0,5 mm aufweisen. Die Kapillarlänge beträgt 10 mm. Der Abstand zwischen der Düsenöffnung und der Probenfluidoberfläche betrug bei den Tests ca. 2 mm. Die Füllhöhe der Probenflüssigkeit im Biochip betrug ca. 1 mm. Die analytsensitive Zone des Biochips hatte eine Fläche von etwa 2,5 x 6 mm². Ein Schrittmotorantrieb diente zur Hin- und Herbewegung des Biochips unter der Düse mit einer Frequenz von etwa 0,5 Hz.

## Patentansprüche

1. Verfahren zum Nachweis von Analyten in einer Flüssigkeit (5), bei dem die Flüssigkeit (5) einer Mischbehandlung auf einer insbesondere immobilisierte Reaktanden aufweisenden Bodenfläche (3) eines als wannenartiges Gefäß mit im Wesentlichen ebenem Boden ausgebildeten Trägers (1) unterzogen wird, wobei die Flüssigkeit (5) bei der Mischbehandlung mittels einer zu der Trägerfläche (3) gerichteten Düse (7) mit einem Gasstrahl (9) beaufschlagt wird, **dadurch gekennzeichnet, dass** zwischen der Düse (7) und dem Träger (1) eine Relativbewegung in der Weise erzeugt wird, dass der Gasstrahl die Trägerfläche (3) abtastend überstreicht, wobei die Düse (7) so orientiert ist, dass der Gasstrahl (9) vertikal auf die Flüssigkeit (5) auftrifft.

2. Verfahren nach Anspruch 1, **dadurch gekennzeichnet, dass** es sich bei dem Gasstrahl (9) um einen Luftstrahl, insbesondere um einen Strahl befeuchteter Luft handelt.

3. Verfahren nach Anspruch 1, **dadurch gekennzeichnet, dass** es sich bei dem Gasstrahl um einen Inertgasstrahl handelt.

4. Verfahren nach einem der vorhergehenden Ansprüche, **dadurch gekennzeichnet, dass** in dem wannenartigen Gefäß Festphasen-Mikropartikel als Träger mit daran immobilisierten Reaktanden aufgenommen sind.

5. Verfahren nach einem der vorhergehenden Ansprüche, **dadurch gekennzeichnet, dass** als Träger (1) ein Biochip mit einem Array von einzelnen Flächen, auf denen sich Reaktanden befinden, verwendet wird.

6. Verfahren nach einem der vorhergehenden Ansprüche, **dadurch gekennzeichnet, dass** ein kontinuierlicher, im Wesentlichen gleichmäßiger Luftstrom zur Beaufschlagung der Flüssigkeit verwendet wird.

7. Vorrichtung zum Nachweis von Analyten in einer Flüssigkeit (5) gemäß dem Verfahren nach einem der vorhergehenden Ansprüche, umfassend
- eine Halterung (30) zur Aufnahme wenigstens eines als wannen-artiges Gefäß mit in Wesentlichen ebenem Boden für die Flüssigkeit (5) ausgebildeten Trägers (1), insbesondere Biochips, der eine Bodenfläche (3) mit daran immobilisierten Reaktanden oder eine Bodenfläche zur Abstützung gesonderter Trägerelemente mit daran befindlichen Reaktanden aufweist, und
- eine Gaszufuhreinrichtung (26) mit wenigstens einer Düse (7) zum Ausstoßen eines Gasstrahls in Richtung der Bodenfläche (3) eines an der Halterung (30) befindlichen Trägers (1),
**gekennzeichnet durch** eine Antriebseinrichtung, die dazu eingerichtet ist, eine Relativbewegung zwischen der Düse (7) und der Halterung (30) in der Weise zu erzeugen, dass ein von der Düse (7) ausgestoßener Gasstrahl (9) die Bodenfläche (3) abtastend überstreicht, wobei der Gasstrahl so orientiert ist, dass er vertikal auf die Flüssigkeit auftrifft.

8. Vorrichtung nach Anspruch 7, **dadurch gekennzeichnet, dass** die Halterung (30) bewegbar gelagert ist und dass die Antriebseinrichtung zur Bewegung der Halterung (30) relativ zu der Düse (7) eingerichtet ist.

9. Vorrichtung nach Anspruch 7 oder 8, **dadurch gekennzeichnet, dass** die Düse (7) bewegbar montiert ist und dass die Antriebseinrichtung zur Bewegung der Düse relativ zu der Halterung eingerichtet ist.

10. Vorrichtung nach Anspruch 7, 8 oder 9, **dadurch gekennzeichnet, dass** die Gaszufuhreinrichtung zur Erzeugung eines mittels der Düse (7) auszustoßenden Luftstrahls ausgebildet ist.

11. Vorrichtung nach Anspruch 10, **dadurch gekennzeichnet, dass** die Gaszufuhreinrichtung eine Einrichtung (19) zur Befeuchtung der Luft aufweist.

12. Vorrichtung nach einem der Ansprüche 7 bis 11, **dadurch gekennzeichnet, dass** die Halterung zur Lagerung einer Vielzahl von Trägern ausgebildet ist und jedem Träger wenigstens eine Düse zugeordnet ist.

## Claims

1. Method for detecting analytes in a liquid (5) in which the liquid is subjected to a mixing treatment on a bottom area (3) of a support (1) formed as a trough-shaped vessel with an essentially flat bottom, said bottom area having in particular immobilized reactants, wherein during the mixing treatment the liquid (5) is impinged upon by a stream of gas (9) by means of a jet (7) directed towards the support area (3), **characterized in that** a relative movement is generated between the jet (7) and the support (1) such that the support area (3) is swept with the gas stream in a scanning manner, wherein the jet (7) is oriented such that the stream of gas (9) strikes the liquid (5) vertically.

2. Method according to claim 1, **characterized in that** the stream of gas (9) is a stream of air and in particular a stream of moistened air.

3. Method according to claim 1, **characterized in that** the gas stream is a stream of inert gas.

4. Method according to one of the previous claims, **characterized in that** solid phase microparticles acting as carriers with reactants immobilized thereon are held in the trough-shaped vessel.

5. Method according to one of the previous claims, **characterized in that** a biochip with an array of individual areas on which reactants are located is used as the support (1).

6. Method according to one of the previous claims, **characterized in that** a continuous, essentially uniform stream of air is used to impinge on the liquid.

7. Device for detecting analytes in a liquid (5) according to the method according to one of the previous claims, comprising
- a holder (30) for holding at least one support (1) formed as a trough-shaped vessel with an essentially flat bottom, in particular biochips, which has a bottom area (3) with reactants immobilized thereon or a bottom area for supporting separate carrier elements with reactants located thereon and,
- a gas supply device (26) comprising at least one jet (7) for emitting a stream of gas towards the bottom area (3) of a support (1) located in the holder (30) and
**characterized by** a drive device which is designed to generate a relative movement between the jet (7) and the holder (30) such that a gas stream (9) emitted from the jet (7) sweeps across the bottom area (3) in a scanning manner, wherein the gas stream is oriented such that it strikes the liquid vertically.

8. Device according to claim 7, **characterized in that** the holder (30) is movably mounted and the drive device is designed to move the holder (30) relative to the jet (7).

9. Device according to claim 7 or 8, **characterized in that** the jet (7) is movably mounted and the drive device is designed to move the jet relative to the holder.

10. Device according to claim 7, 8 or 9, **characterized in that** the gas supply device is designed to generate a stream of air that is to be discharged by the jet (7).

11. Device according to claim 10, **characterized in that** the gas supply device has a device (19) for moistening the air.

12. Device according to one of the claims 7 to 11, **characterized in that** the holder is designed to store a plurality of supports and each support is allocated at least one jet.

## Revendications

1. Procédé pour détecter des analytes dans un liquide (5), dans lequel le liquide (5) est soumis à un traitement de mélange sur une surface de fond (3), présentant en particulier des réactifs immobilisés sur un support (1) conçu sous forme de récipient du type cuve avec un fond sensiblement plan, le liquide (5) étant sollicité lors du traitement de mélange avec un jet de gaz (9) au moyen d'une buse (7) dirigée vers la surface support (3), **caractérisé en ce qu'**un déplacement relatif est généré entre la buse (7) et le support (1), de sorte que le jet de gaz recouvre la surface support (3) par balayage, la buse (7) étant orientée de telle sorte que le jet de gaz (9) arrive verticalement sur le liquide (5).

2. Procédé selon la revendication 1, **caractérisé en ce que**, concernant le jet de gaz (9), il s'agit d'un jet d'air, en particulier d'un jet d'air humidifié.

3. Procédé selon la revendication 1, **caractérisé en ce que**, concernant le jet de gaz, il s'agit d'un jet de gaz inerte.

4. Procédé selon l'une quelconque des revendications précédentes, **caractérisé en ce que** des microparticules à l'état solide en tant que support avec des réactifs immobilisés dessus sont réceptionnées dans le récipient en forme de cuve.

5. Procédé selon l'une quelconque des revendications précédentes, **caractérisé en ce qu'**une biopuce avec un agencement de surfaces individuelles, sur lesquelles se trouvent des réactifs, est utilisée comme support (1).

6. Procédé selon l'une quelconque des revendications précédentes, **caractérisé en ce qu'**un flux d'air continu et sensiblement uniforme est utilisé pour la sollicitation du liquide.

7. Dispositif pour détecter des analytes dans un liquide (5) conformément au procédé selon l'une quelconque des revendications précédentes, comprenant
- une fixation (30) pour la réception d'au moins un support (1) conçu comme récipient de type cuve avec un fond sensiblement plat pour le liquide (5), en particulier des biopuces, qui présentent une surface de fond (3) avec des réactifs immobilisés dessus ou une surface de fond pour le soutien d'éléments supports séparés avec des réactifs se trouvant dessus, et
- un dispositif d'arrivée de gaz (26) avec au moins une buse (7) pour l'éjection d'un jet de gaz en direction de la surface de fond (3) d'un support (1) se trouvant sur la fixation (30),
**caractérisé par** un dispositif d'entraînement qui est conçu pour générer un déplacement relatif entre la buse (7) et la fixation (30), de sorte qu'un jet de gaz (9) éjecté par la buse (7) recouvre par balayage la surface de fond (3), le jet de gaz étant orienté de telle sorte qu'il arrive verticalement sur le liquide.

8. Dispositif selon la revendication 7, **caractérisé en ce que** la fixation (30) est montée de façon mobile et **en ce que** le dispositif d'entraînement est aménagé pour le déplacement de la fixation (30) par rapport à la buse (7).

9. Dispositif selon la revendication 7 ou 8, **caractérisé en ce que** la buse (7) est montée mobile et **en ce que** le dispositif d'entraînement est aménagé pour le déplacement de la buse par rapport à la fixation.

10. Dispositif selon la revendication 7, 8 ou 9, **caractérisé en ce que** le dispositif d'arrivée de gaz est conçu pour générer un jet de gaz à éjecter au moyen de la buse (7).

11. Dispositif selon la revendication 10, **caractérisé en ce que** le dispositif d'arrivée de gaz présente un dispositif (19) pour l'humidification de l'air.

12. Dispositif selon l'une quelconque des revendications 7 à 11, **caractérisé en ce que** la fixation est conçue pour le logement d'une pluralité de supports et au moins une buse est attribuée à chaque support.
